# EUROPEAN PATENT APPLICATION

(11) **EP 4 765 073 A1**
(43) Date of publication of application: **24.06.2026**
(21) Application number: 25736273.1
(22) Date of filing: 03.01.2025
(51) Int. Cl.: G09B 9/00, G09B 5/02, G06F 3/01, G06F 3/048, G06Q 50/20, H01M 10/04

(54) **SIMULATION SYSTEM AND OPERATION METHOD OF SIMULATION SYSTEM**

(30) Priority: 03.01.2024 KR 20240000746
(71) Applicant: LG Energy Solution, Ltd., Seoul 07335 (KR)
(72) Inventor: JUNG, Gi Teck, Daejeon 34122 (KR); KIM, Yong Nam, Daejeon 34122 (KR)
(74) Representative: BCKIP Part mbB
(86) International application number: PCT/KR2025/000085
(87) International publication number: WO 2025/147119

(57) **Abstract**

According to some embodiments, a simulation system includes an interface panel configured to receive a manipulation input from a worker, a main simulator configured to load training content reproducing processes of manufacturing a battery through electrode notching based on the manipulation input and to provide the training content to the worker through interaction with the worker, and a display configured to display detailed images of the processes based on characteristics of the training content.

## Description

### CROSS-REFERENCE TO RELATED APPLICATION

The present application claims the benefit of the priority of Korean Patent Application No. 10-2024-0000746, filed on January 3, 2024, which is hereby incorporated by reference in its entirety.

### TECHNICAL FIELD

Embodiments disclosed in this document relate to a simulation system and an operating method of the simulation system.

### BACKGROUND ART

Recently, research and development on secondary batteries have been actively conducted. Here, the secondary batteries are batteries that can be charged and discharged, and may be interpreted to include both conventional Ni/Cd batteries, Ni/MH batteries, and recent lithium ion batteries. Among secondary batteries, lithium ion batteries may have higher energy density than conventional Ni/Cd batteries, Ni/MH batteries, etc., and may be manufactured to be small and lightweight form, and thus the lithium ion batteries may have high usability in terms of a power source of mobile devices. Recently, the scope of use of the lithium ion batteries has expanded to include a power source for electric vehicles, and the lithium ion batteries are attracting attention as a next-generation energy storage medium.

Since a manufacturing process of secondary batteries includes numerous detailed assembly processes and inspection steps, new workers may learn the manufacturing process with the help of skilled workers. However, when there is a shortage of skilled workers for a newly introduced process line or there is a language barrier in worker training at an overseas factory, a simulation that reproduces the battery manufacturing in the same way as it is in the real world can be used for worker training. Meanwhile, since a structure and manufacturing method of batteries are being developed at a rapid pace, training simulations may also be required to be developed together.

### DISCLOSURE OF THE INVENTION

### TECHNICAL PROBLEM

One objective of the embodiments disclosed in this document is to provide a simulation system capable of providing a simulation for training a worker on processes of manufacturing a cylindrical battery through electrode notching, and an operating method of the simulation system.

The technical objectives of the embodiments disclosed in this document is not limited to the technical problems mentioned above, and other technical problems not mentioned can be clearly understood by those skilled in the art from the descriptions below.

### TECHNICAL SOLUTION

According to some embodiments, a simulation system includes an interface panel configured to receive a manipulation input from a worker, a main simulator configured to load training content reproducing processes of manufacturing a battery through electrode notching based on the manipulation input and to provide the training content to the worker through interaction with the worker, and a display configured to display detailed images of the processes based on characteristics of the training content.

According to some embodiments, the training content may be configured to reproduce the processes of manufacturing the cylindrical battery through the electrode notching.

According to some embodiments, the processes include a laser notching process of forming electrode tabs on electrode sheets of the cylindrical battery, a separation film forming process of forming separation film sheets of the cylindrical battery between the electrode sheets, and a winding process of winding a stacking unit of the electrode sheets and the separation film sheets.

According to some embodiments, the training content includes guide content for the processes, facility operation content for the processes, quality check content for the processes, condition adjustment content for the processes, and test content for the processes.

According to some embodiments, the facility operation content for the laser notching process is configured to display a process of performing laser notching on the electrode sheets according to a current setting value of a notching pattern and a notching parameters of the laser notching process and a shape of the electrode tabs formed as a result of the laser notching process to the worker.

According to some embodiments, the condition adjustment content for the laser notching process is configured to receive a pre-change setting value and a post-change setting value of at least one of the notching pattern and the notching parameters from the worker, and display to the worker the shape of the electrode tabs formed based on the pre-change setting value and the shape of the electrode tabs formed based on the post-change setting value.

According to some embodiments, the notching pattern includes a laser scanning pattern for removing a remaining portion except for the electrode tabs at end portions of the electrode sheets, and notching parameters include laser intensity, the number of scan repetitions, and transport speed of the electrode sheets.

According to some embodiments, the quality check content for the laser notching process is configured to generate a comparison image comparing the shape of the electrode tabs formed as a result of performing the laser notching process according to the current setting value and a shape of a reference electrode tab, and to provide a quality score of the electrode tabs based on the comparison image.

According to some embodiments, the quality check content for the laser notching process is configured to provide a recommended setting value of the notching pattern and the notching parameters required to reduce a difference between the shape of the electrode tabs and the shape of the reference electrode tab based on the comparison image.

According to some embodiments, an operating method of a simulation system includes receiving, through an interface panel, a manipulation input from a worker, loading, through a main simulator, training content reproducing processes of manufacturing a battery through electrode notching based on the manipulation input, providing, through the main simulator, the training content to the worker through interaction with the worker, and displaying, through a display, detailed images of the processes based on characteristics of the training content.

According to some embodiments, the training content may be configured to reproduce the processes of manufacturing the cylindrical battery through the electrode notching.

According to some embodiments, the processes include a laser notching process of forming electrode tabs on electrode sheets of the cylindrical battery, a separation film forming process of forming separation film sheets of the cylindrical battery between the electrode sheets, and a winding process of winding a stacking unit of the electrode sheets and the separation film sheets.

According to some embodiments, the training content includes guide content for the processes, facility operation content for the processes, quality check content for the processes, condition adjustment content for the processes, and test content for the processes.

According to some embodiments, the facility operation content for the laser notching process is configured to display a process of performing laser notching on the electrode sheets according to a current setting value of a notching pattern and notching parameters of the laser notching process and a shape of the electrode tabs formed as a result of the laser notching process to the worker.

According to some embodiments, the condition adjustment content for the laser notching process is configured to receive a pre-change setting value and a setting value after change of at least one of the notching pattern and the notching parameters from the worker, and display to the worker the shape of the electrode tabs formed based on the setting value before the change and the shape of the electrode tabs formed based on the setting value after the change.

According to some embodiments, the notching pattern includes a laser scanning pattern for removing a remaining portion except for the electrode tabs at end portions of the electrode sheets, and the notching parameters include laser intensity, the number of scan repetitions, and transport speed of the electrode sheets.

According to some embodiments, the quality check content for the laser notching process is configured to generate a comparison image comparing the shape of the electrode tabs formed as a result of performing the laser notching process according to the current setting value and a shape of a reference electrode tab, and to provide a quality score of the electrode tabs based on the comparison image.

According to some embodiments, the quality check content for the laser notching process is configured to provide a recommended setting value of the notching pattern and the notching parameters required to reduce a difference between the shape of the electrode tabs and the shape of the reference electrode tab based on the comparison image.

### ADVANTAGEOUS EFFECTS

According to the embodiments disclosed in this document, a simulation system and an operating method of the simulation system that can provide a simulation for training a worker on processes of manufacturing a cylindrical battery through electrode notching may be provided.

The technical effects according to the embodiments disclosed in this document are not limited to the effects mentioned above, and other effects not mentioned may be clearly understood by those skilled in the art according to the disclosure of this document.

### BRIEF DESCRIPTION OF THE DRAWINGS

FIG. 1 may illustrate an environment in which a simulation system operates according to some embodiments.
FIG. 2 may illustrate elements constituting a simulation system according to some embodiments.
FIG. 3 may illustrate a structure of a simulation system according to some embodiments.
FIG. 4 may illustrate processes of manufacturing a cylindrical battery through electrode notching according to some embodiments.
FIG. 5 may illustrate training content for processes of manufacturing a cylindrical battery through electrode notching according to some embodiments.
FIG. 6 may illustrate a process of forming an electrode tab through a laser notching process according to some embodiments.
FIG. 7 may illustrate steps that configure an operating method of a simulation system according to some embodiments.

### MODE FOR CARRYING OUT THE INVENTION

Hereinafter, embodiments described in this document are described with reference to the accompanying drawings. However, this is not intended to limit the disclosure of this document to a specific embodiment, but should be understood to include various modifications, equivalents, and/or alternatives of the embodiments described in this document.

The embodiments of this document and the terms used therein are not intended to limit the technical features described in this document to a specific embodiment, but should be understood to include various modifications, equivalents, or alternatives of the embodiment. In connection with the description of the drawings, similar reference numerals may be used for similar or related components. The singular form of a noun corresponding to an item may include one or more of said items, unless the context clearly indicates otherwise.

In this document, each of phrases "A or B", "at least one of A and B", "at least one of A or B", "A, B, or C", "at least one of A, B, and C", and "at least one of A, B, or C" may include any one of the items listed together in that phrase, or all possible combinations thereof. Terms such as "first", "second", "firstly", "secondly", "A", "B", "(a)", or "(b)" may be used merely to distinguish one component from another, and do not limit the components in any other respect (e.g., importance or order) unless specifically stated otherwise.

In this document, when a component (e.g., a first component) is referred to as being "connected", "coupled" or "joined" to another component (e.g., a second component), with or without the terms "functionally" or "communicatively", it means that the component can be connected to the other component directly (e.g., wired or wirelessly), or indirectly (e.g., through a third component).

The method according to various embodiments disclosed in this document may be provided by being included in a computer program product. The computer program product may be traded between a seller and a buyer as a product. The computer program product may be distributed in the form of a machine-readable storage medium (e.g., compact disc read only memory (CD-ROM)), or may be distributed online (e.g., downloaded or uploaded) through an application store or directly between two user devices. In the case of online distribution, at least a part of the computer program product may be temporarily stored or temporarily generated in a machine-readable storage medium such as a memory of a manufacturer's server, an application store's server, a relay server.

According to the embodiments disclosed in this document, each of the components (e.g., modules or programs) described above may include a single or plurality of entities, and some of the plurality of entities may be separated and placed in other components. According to the embodiments disclosed in this document, one or more of the components or operations described above may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to the embodiments disclosed in this document, the operations performed by a module, program, or other component may be performed sequentially, in parallel, repeatedly, or heuristically, or one or more of the operations may be performed in a different order, omitted, or performed by being added with one or more other operations.

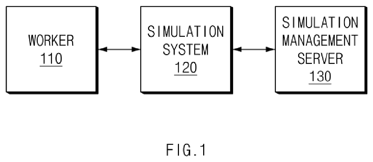

FIG. 1 may illustrate an environment in which a simulation system operates according to some embodiments.

Referring to FIG. 1, a simulation system 120 may provide simulation content to a worker 110. A simulation management server 130 may manage content of the simulation system 120.

The simulation system 120 may provide simulation training on a manufacturing process of a cylindrical battery to the worker 110. According to the embodiment, the manufacturing process may include a process of manufacturing a cylindrical battery through electrode notching. The simulator system 120 may perform laser notching on an electrode plate to form an electrode tab and provide the process of manufacturing the cylindrical battery using the same in the form of a simulation to the worker 110.

The simulation management server 130 may be configured to manage training content provided by the simulator system 120. The simulation management server 130 may record a result of the performance of the training content, derive statistical data based on the results, add or change the contents of the training content based on the statistical data, and transmit the added or changed contents to the simulator system 120. According to the embodiment, the simulation management server 130 may install content management software on the simulator system 120 and provide update information of the content management software.

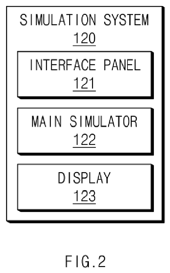

FIG. 2 may illustrate elements that constitute a simulation system according to some embodiments.

Referring to FIG. 2, the simulator system 120 may include an interface panel 121, a main simulator 122, and a display 123. However, the present invention is not limited thereto, and some components may be omitted from the simulation system 120, or other general-purpose components may be further included in the simulation system 120.

According to the embodiment, the interface panel 121, the main simulator 122, and the display 123 may be electrically connected to each other through an inter-device communication method such as a bus, a general purpose input and output (GPIO), a serial peripheral interface (SPI), a mobile industry processor interface (MIPI), etc.

The interface panel 121 may provide an interface function between the worker 110 and the simulation system 120. For example, the interface panel 121 may be configured in the form of a human machine interface (HMI) panel. The interface panel 121 may receive a manipulation input for manipulating the simulation system 120 from the worker 110 in a manner of a touch input, a button input, a mouse input, etc. The interface panel 121 may provide a graphical interface such as a screen that provides a selection of manipulation inputs.

The main simulator 122 may be configured to execute a simulation regarding cylindrical battery manufacturing. The main simulator 122 may interact with the worker 110 to proceed with the simulation. For example, the main simulator 122 may receive a touch input or a drag input from the worker 110, proceed with process steps of the cylindrical battery accordingly, and display the results generated at each process step to the worker 110. The main simulator 122 may include a processor and memory for executing simulation software.

The processor of the main simulator 122 may have a structure for executing instructions that implement the simulation. The processor may be implemented as an array of multiple logic gates or a general-purpose microprocessor for processing various operations, and may be configured with a single processor or a plurality of processors. For example, the processor may be implemented in the form of at least one of a microprocessor, a CPU, a GPU, and an AP.

The memory or storage of the main simulator 122 may be configured to temporarily store data or instructions, and may be configured separately from or integral with the processor. The processor may process various operations by executing instructions stored in the memory and/or storage. The memory and/or storage may store various data, instructions, software, mobile applications, computer programs, etc. For example, the memory and/or storage may be implemented as non-volatile devices such as a ROM, a PROM, an EPROM, an EEPROM, a flash memory, a PRAM, an MRAM, an RRAM, an FRAM, etc., or volatile devices such as a DRAM, an SRAM, an SDRAM, a PRAM, etc., and may be implemented in the form of an HDD, an SSD, an SD, a Micro-SD, etc., or in the form of a combination thereof.

The display 123 may include a display panel that provides various visual information to the worker 110. The display 123 may display detailed images of a simulation being executed in the main simulator 122. For example, when a manufacturing process of a cylindrical battery is in progress in the main simulator 122, external images recognizable by the naked eye in each process may be displayed through the main simulator 122, and images of invisible areas that cannot be recognized by the naked eye may be displayed through the display 123.

The interface panel 121 may be configured to receive a manipulation input from the worker 110. The interface panel 121 may be implemented in the same form as a panel installed in an actual process line, and may receive a manipulation input from the worker 110 in the same manner as the panel installed in the actual process line. For example, the manipulation input of the worker 110 may include facility operation, facility stop, facility automatic operation, facility manual operation, facility one-time operation, facility operation preparation, facility reset, emergency stop, etc. In addition, the manipulation input of the worker 110 may include various input values or setting values of the battery manufacturing process.

The main simulator 122 may be configured to load training content that reproduces processes of manufacturing the cylindrical battery through electrode notching based on the manipulation input. For example, when the worker 110 inputs an facility operation button on the interface panel 121, the main simulator 122 may load a virtual battery manufacturing facility. The training content may reproduce the processes of manufacturing the cylindrical battery through electrode notching. The cylindrical battery may include a jelly roll inside a battery can, and the jelly roll may be formed by winding a positive electrode plate, a negative electrode plate, and a separation film. The positive electrode plate and the negative electrode plate may have a positive tab and a negative electrode tab, respectively. In general, the positive tab and the negative tab may be formed by an attachment method, but in contrast, the manufacturing process reproduced by the simulation system 120 may form the positive plate and the negative plate by an electrode notching method instead of a tab attachment method. According to an embodiment, notching for forming the electrode tabs of the cylindrical battery may include laser notching. The electrode notching may form the positive tab and the negative tab by removing a portion except for the positive tab and the negative tab from the positive plate and the negative plate.

The main simulator 122 may be configured to provide training content to the worker 110 through interaction with the worker 110. For example, the training content may require input from the worker 110 to provide content such as process/facility guides, facility operation, and quality check to the worker 110. The input from the worker 110 may include a mouse input, a keyboard input, a touch input, etc. with respect to the main simulator 122. The input of the worker 110 may be configured in a form similar to an operation performed in the actual process line. The main simulator 122 may express a response to an input of the worker 110 when the input is appropriate. For example, in the facility operation content, if the worker 110 inputs an appropriate manipulation, the main simulator 122 may display a state in which the virtual facility operates.

The display 123 may be configured to display detailed images of the processes based on characteristics of the training content. For example, the characteristics of the training content may include a type of the training content, detailed steps of the battery manufacturing process, etc. The types of the training content may include guides, facility operation, quality check, etc. Detailed steps of the battery manufacturing process may include electrode plate formation, electrode tab formation, separation film formation, jelly roll winding, etc. Depending on the characteristics of the training content, parts that are difficult to check with naked eyes or parts that require more detailed check may be displayed as detailed images.

According to the embodiment, the processes may include a laser notching process of forming electrode tabs on electrode sheets of a cylindrical battery, a separation film forming process of forming separation film sheets of the cylindrical battery between the electrode sheets, and a winding process of winding a stacking unit of the electrode sheets and separation film sheets. Unlike the conventional electrode tab attachment method, the simulation system 120 may form electrode tabs on the electrode sheets using a laser notching method. To this end, the simulation processes of the training content may include a laser notching process. After the electrode tabs are formed, a separation film forming process and a winding process for manufacturing the cylindrical battery may follow.

According to the embodiment, the training content may include guide content for the processes, facility operation content for the processes, quality check content for the processes, condition adjustment content for the processes, and test content for the processes. In the case of the guide content, the main simulator 122 may provide the worker 110 with a guide explaining the progress of the laser notching process, the separation film forming process, and the winding process or the facilities. In the case of the facility operation content, the main simulator 122 may receive input for manipulating a virtual 3D facility of each process from the worker 110, and display the process in which the virtual 3D facility operates to the worker 110 accordingly. In the case of quality check content, the main simulator 122 may allow the worker 110 to check a shape or dimensions of the result of each process. In the case of the condition adjustment content, the main simulator 122 may adjust process conditions, process requirements, process parameters, etc. for each process based on the input of the worker 110. In the case of the test content, the worker 110 may perform a test configured similarly to work on an actual line work for each process through the main simulator 122.

According to the embodiment, the facility operation content for the laser notching process may be configured to display the process of performing laser notching on electrode sheets according to current setting values of a notching pattern and notching parameters of the laser notching process, and the shape of the electrode tabs formed as a result of the laser notching process to the worker 110. The main simulator 122 may display a virtual 3D laser notching facility to the worker 110 to provide the facility operation content. The worker 110 may input the current setting values of the notching pattern and notching parameters through the interface panel 121. The main simulator 122 may display the process of performing laser notching according to the current setting value to the worker 110. The main simulator 122 may display the shape of the electrode tab formed on the electrode sheet as a result of the laser notching to the worker 110. Meanwhile, the display 123 may enlarge and display the part selected by the worker 110 for the process of the laser notching or resulting electrode tab, and may render and display the inside of the facility or the inside of the electrode tab, etc., which cannot be checked with the naked eye.

According to the embodiment, the condition adjustment content for the laser notching process may be configured to receive at least one of a pre-change setting value and a post-change setting value among the notching pattern and notching parameters from the worker 110, and display the shapes of electrode tabs formed based on the pre-change setting value and the shapes of electrode tabs formed based on the post-change setting value to the worker 110. For the condition adjustment content, the worker 110 may change the setting values of the notching pattern and the notching parameters. When the pre-change setting value and the post-change setting value are determined, the main simulator 122 may display a pre-change shape and a post-change shape of the electrode tabs together. Through this, the worker 110 may check how the electrode tab shape changes due to a change in the setting value.

According to the embodiment, the notching pattern may include a laser scanning pattern for removing the remaining portion except for the electrode tabs at end portions of the electrode sheets, and the notching parameters may include laser intensity, the number of scan repetitions, and transport speed of the electrode sheets. The laser scanning pattern may include an area to be laser scanned on the electrode sheet, a direction of the laser scan, etc. The laser scan area may be determined by an area of a target electrode tab and a buffer area. The direction of the laser scan may include a horizontal direction, a vertical direction, a diagonal direction, etc. The laser notching may be performed while the electrode sheets are being transported. The duration of the laser notching may be shortened as the transport increases. The amount of the laser notching may be determined by the laser intensity and the number of scan repetitions.

According to the embodiment, the quality check content for the laser notching process may be configured to generate a comparison image comparing the shape of electrode tabs formed as a result of performing the laser notching process according to the current setting value and the shape of a reference electrode tab, and to provide a quality score of the electrode tabs based on the comparison image. For example, the main simulator 122 may display the electrode tab shape and the reference electrode tab shape according to the current setting value together to the worker 110. In addition, the main simulator 122 may calculate the quality score of the electrode tab according to the current setting value based on a difference between the electrode tab shape and the reference electrode tab shape. The smaller the difference from the reference electrode tab, the higher the quality score. A shape difference may be derived through a CNN model for image processing, etc. Meanwhile, the reference electrode tab shape may change depending on a change in the quality requirement.

According to the embodiment, the quality check content for the laser notching process may be configured to provide recommended setting values of the notching pattern and the notching parameters required to reduce the difference between the shape of the electrode tabs and the shape of the reference electrode tab based on the comparison image. For example, the main simulator 122 may determine whether the amount of laser notching is appropriate based on the comparison image, and may provide recommended setting values such as a decrease in the electrode sheet feed speed, an increase in the laser intensity, or an increase in the number of scan repetitions when the amount of laser notching is insufficient.

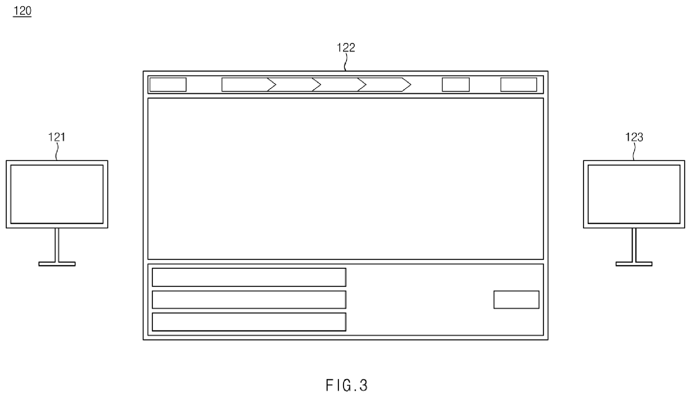

FIG. 3 may illustrate a structure of a simulation system according to some embodiments.

Referring to FIG. 3, in the simulation system 120, the interface panel 121 may be disposed on the left side of the main simulator 122, and the display 123 may be disposed on the right side of the main simulator 122. However, the present invention is not limited thereto, and a different disposition structure may be applied depending on the body structure or movement line of the worker 110.

The worker 110 may generate a manipulation input for operating the virtual facilities of the main simulator 122 in the interface panel 121 on the left thereof, train the simulation content through touch and drag inputs on the main simulator 122 on the center, and check detailed images of the battery manufacturing process through the display 123 on the right.

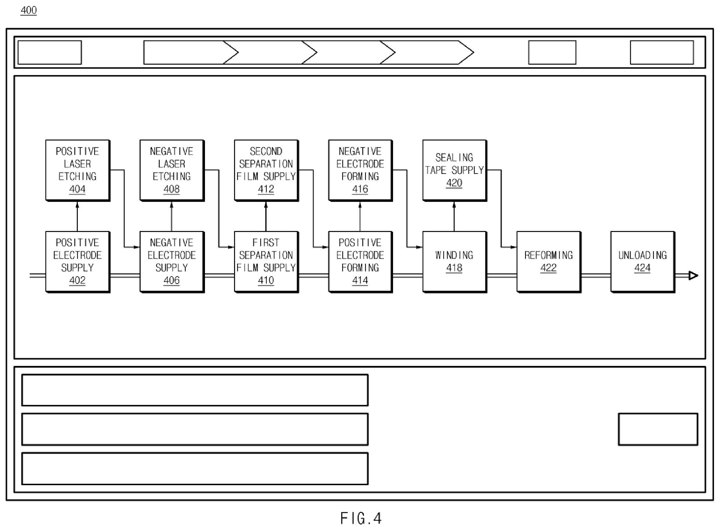

FIG. 4 may illustrate processes of manufacturing a cylindrical battery through electrode notching according to some embodiments.

Referring to FIG. 4, a simulator image 400 illustrating processes of manufacturing the cylindrical battery through electrode notching may be illustrated. For example, the simulator image 400 may be displayed through the main simulator 122.

As illustrated in the simulator image 400, the processes of manufacturing the cylindrical battery through electrode notching may include processes 402 to 424. In processes 402 and 404, a positive electrode sheet may be supplied, and laser notching may be performed on the positive electrode sheet. In processes 406 and 408, a negative electrode sheet may be supplied, and laser notching may be performed on the negative electrode sheet. In processes 410 and 412, a first separation film and a second separation film may be supplied. The positive electrode sheet, the first separation film, the negative electrode sheet, and the second separation film may be sequentially stacked.

In processes 414 and 416, a positive tab may be formed on the positive sheet, and a negative tab may be formed on the negative sheet. In process 418, winding may be performed on the stacked structure of the positive sheet, the first separation film, the negative sheet, and the second separation film, and a jelly roll may be formed. In processes 420 and 422, the jelly roll may be sealed to a battery can through a tape, and reforming of the cylindrical battery may be performed. In process 424, a completed cylindrical battery may be unloaded.

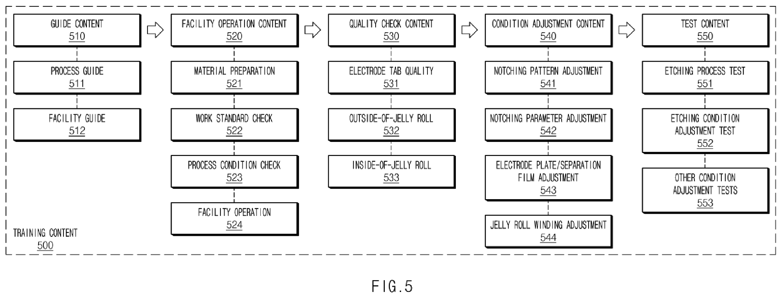

FIG. 5 may illustrate training content for processes of manufacturing a cylindrical battery through electrode notching according to some embodiments.

Referring to FIG. 5, training content 500 for the processes of manufacturing the cylindrical battery through electrode notching may be illustrated. According to the embodiment, the training content 500 may include guide content 510, facility operation content 520, quality check content 530, condition adjustment content 540, and test content 550.

The simulation system 120 may provide a process guide 511 and a facility guide 512 to the worker 110 through the guide content 510. The process guide 511 may guide a configuration of a jelly roll, such as a positive electrode, a negative electrode, a separation film, and a sealing tape. The facility guide 512 may guide a laser notching facility, a tab forming facility, a winding facility, an unwinding facility, a conveyor transport facility, etc.

The simulation system 120 may provide the worker 110 with the content such as material preparation 521 and work standard check 522, process condition check 523, facility operation 524, etc. through the facility operation content 520. The material preparation 521 may provide information on materials such as electrodes, separation films, and sealing tapes.

The simulation system 120 may allow the worker 110 to check electrode tab quality 531 and outside-of-the jelly roll 532, inside-of-the jelly roll 533, etc. through the quality check content 530. The worker 110 may check the overall height, tab protrusion length, sealing tape attachment location, etc. through the outside-of-the jelly roll 532. The worker 110 may check the electrode length, tab formation height, sealing tape position/length, tab height/length, etc. through the inside-of-the jelly roll 533.

The simulation system 120 may allow the worker 110 to adjust the process condition of each process through the condition adjustment content 540. The worker 110 may train notching pattern adjustment 541, notching parameter adjustment 542, electrode plate/separation film adjustment 543, jelly roll winding adjustment 544, etc. through the condition adjustment content 540.

The simulation system 120 may test the worker 110 through the test content 550. The test content 550 may include a notching process test 551, a notching condition adjustment test 552, and other condition adjustment tests 553.

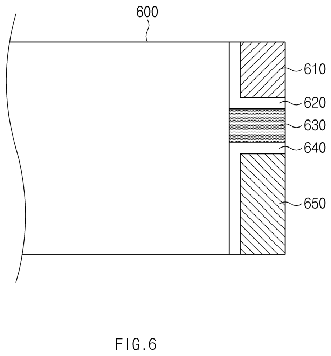

FIG. 6 may illustrate a process of forming an electrode tab through a laser notching process according to some embodiments.

Referring to FIG. 6, an electrode sheet 600 that is notched by the laser notching process may be illustrated. The electrode sheet 600 may be a positive electrode sheet or a negative electrode sheet.

Notching areas 610 and 650 may be removed through notching to form an electrode tab on the electrode sheet 600. The notching areas 610 and 650 may be determined by an area 630 of the target electrode tab and buffer areas 620 and 640. Whether the notching is appropriately performed may be checked through the quality check content 530, and the notching areas 610 and 650 and/or the buffer areas 620 and 640 may be adjusted through the condition adjustment content 540.

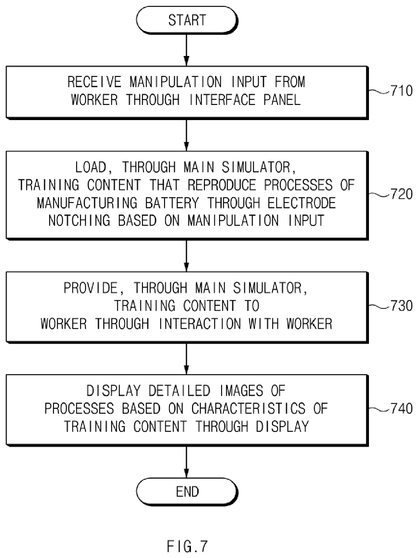

FIG. 7 may illustrate steps that configure an operating method of the simulation system according to some embodiments.

Referring to FIG. 7, an operating method 700 of the simulation system may include steps 710 to 740. However, the present invention is not limited thereto, and some steps may be omitted or other general steps may be added, and the steps of the operating method 700 of the simulation system may be executed in a different order from the illustrated order.

The operating method 700 of the simulation system may be composed of steps that are processed in time series in the simulation system 120. Therefore, even if the contents are omitted below, the contents described above for the simulation system 120 may be equally applied to the operating method 700 of the simulation system.

Steps 710 to 740 of the operating method 700 of the simulation system 120 may be performed by the interface panel 121, the main simulator 122, and the display 123 of the simulation system 120.

In step 710, the simulation system 120 may receive a manipulation input from a worker through the interface panel.

In step 720, the simulation system 120 may load, through the main simulator, training content that reproduces processes of manufacturing a battery through electrode notching based on the manipulation input.

In step 730, the simulation system 120 may provide, through the main simulator, training content to the worker through interaction with the worker.

In step 740, the simulation system 120 may display detailed images of the processes based on the characteristics of the training content through the display.

According to the embodiment, the operating method 700 of the simulation system may be implemented in the form of a computer program stored in a computer-readable storage medium. That is, the computer program may include instructions for implementing the operating method 700 of the simulation system, and the instructions of the program may be stored in the computer-readable storage medium. The computer program may include a mobile application.

According to the embodiment, the computer-readable storage medium may include magnetic media such as hard disks, floppy disks, and magnetic tapes, optical media such as CD-ROMs, DVDs, magneto-optical media such as floptical disks, and hardware devices specifically configured to store and execute computer program instructions such as ROMs, RAMs, flash memory, etc. The computer program instructions may include machine language codes produced by a compiler and high-level language codes executable by a computer using an interpreter, etc.

The terms "include," "configure," or "have" described above, unless specifically stated to the contrary, mean that the corresponding component may be included, and therefore should be interpreted as further including other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above description is merely an illustrative description of the technical idea disclosed in this document, and a person skilled in the art to which the embodiments disclosed in this document belong may make various modifications and variations thereto without departing from the essential characteristics of the embodiments disclosed in this document. Therefore, the embodiments disclosed in this document are not intended to limit the technical idea of the embodiments disclosed in this document, but rather to explain it, and the scope of the technical idea disclosed in this document is not limited by these embodiments. The scope of protection of the technical idea disclosed in this document should be interpreted by the claims below, and all technical ideas within the equivalent scope should be interpreted as being included in the scope of the rights of this document.

### [Description of symbols]

110: worker 120: simulation system
130: simulation management server 121: interface panel
122: main simulator 123: display

## Claims

1. A simulation system comprising:
an interface panel configured to receive a manipulation input from a worker;
a main simulator configured to load training content reproducing processes of manufacturing a battery through electrode notching based on the manipulation input and to provide the training content to the worker through interaction with the worker; and
a display configured to display detailed images of the processes based on characteristics of the training content.

2. The simulation system of claim 1, wherein the training content is configured to reproduce the processes of manufacturing the cylindrical battery through the electrode notching.

3. The simulation system of claim 2, wherein the processes include a laser notching process of forming electrode tabs on electrode sheets of the cylindrical battery, a separation film forming process of forming separation film sheets of the cylindrical battery between the electrode sheets, and a winding process of winding a stacking unit of the electrode sheets and the separation film sheets.

4. The simulation system of claim 3, wherein the training content includes guide content for the processes, facility operation content for the processes, quality check content for the processes, condition adjustment content for the processes, and test content for the processes.

5. The simulation system of claim 4, wherein the facility operation content for the laser notching process is configured to display a process of performing laser notching on the electrode sheets according to a current setting value of a notching pattern and a notching parameters of the laser notching process and a shape of the electrode tabs formed as a result of the laser notching process to the worker.

6. The simulation system of claim 5, wherein the condition adjustment content for the laser notching process is configured to receive a pre-change setting value and a post-change setting value of at least one of the notching pattern and the notching parameters from the worker, and display to the worker the shape of the electrode tabs formed based on the pre-change setting value and the shape of the electrode tabs formed based on the post-change setting value.

7. The simulation system of claim 6, wherein the notching pattern includes a laser scanning pattern for removing a remaining portion except for the electrode tabs at end portions of the electrode sheets, and the notching parameters include laser intensity, the number of scan repetitions, and transport speed of the electrode sheets.

8. The simulation system of claim 5, wherein the quality check content for the laser notching process is configured to generate a comparison image comparing the shape of the electrode tabs formed as a result of performing the laser notching process according to the current setting value and a shape of a reference electrode tab, and to provide a quality score of the electrode tabs based on the comparison image.

9. The simulation system of claim 8, wherein the quality check content for the laser notching process is configured to provide a recommended setting value of the notching pattern and the notching parameters required to reduce a difference between the shape of the electrode tabs and the shape of the reference electrode tab based on the comparison image.

10. An operating method of a simulation system, comprising:
receiving, through an interface panel, a manipulation input from a worker;
loading, through a main simulator, training content reproducing processes of manufacturing a battery through electrode notching based on the manipulation input;
providing, through the main simulator, the training content to the worker through interaction with the worker; and
displaying, through a display, detailed images of the processes based on characteristics of the training content.

11. The operating method of claim 10, wherein the training content is configured to reproduce the processes of manufacturing the cylindrical battery through the electrode notching.

12. The operating method of claim 11, wherein the processes include a laser notching process of forming electrode tabs on electrode sheets of the cylindrical battery, a separation film forming process of forming separation film sheets of the cylindrical battery between the electrode sheets, and a winding process of winding a stacking unit of the electrode sheets and the separation film sheets.

13. The operating method of claim 12, wherein the training content includes guide content for the processes, facility operation content for the processes, quality check content for the processes, condition adjustment content for the processes, and test content for the processes.

14. The operating method of claim 13, wherein the facility operation content for the laser notching process is configured to display a process of performing laser notching on the electrode sheets according to a current setting value of a notching pattern and a notching parameters of the laser notching process and a shape of the electrode tabs formed as a result of the laser notching process to the worker.

15. The operating method of claim 14, wherein the condition adjustment content for the laser notching process is configured to receive a pre-change setting value and a post-change setting value of at least one of the notching pattern and the notching parameters from the worker, and display to the worker the shape of the electrode tabs formed based on the pre-change setting value and the shape of the electrode tabs formed based on the post-change setting value.

16. The operating method of claim 15, wherein the notching pattern includes a laser scanning pattern for removing a remaining portion except for the electrode tabs at end portions of the electrode sheets, and the notching parameters include laser intensity, the number of scan repetitions, and transport speed of the electrode sheets.

17. The operating method of claim 14, wherein the quality check content for the laser notching process is configured to generate a comparison image comparing the shape of the electrode tabs formed as a result of performing the laser notching process according to the current setting value and a shape of a reference electrode tab, and to provide a quality score of the electrode tabs based on the comparison image.

18. The operating method of claim 17, wherein the quality check content for the laser notching process is configured to provide a recommended setting value of the notching pattern and the notching parameters required to reduce a difference between the shape of the electrode tabs and the shape of the reference electrode tab based on the comparison image.
